# EUROPÄISCHE PATENTSCHRIFT

(11) **EP 3 811 134 B1**
(45) Veröffentlichungstag und Bekanntmachung des Hinweises auf die Patenterteilung: **25.09.2024**
(21) Anmeldenummer: 19734697.6
(22) Anmeldetag: 06.06.2019
(51) Int. Cl.: G02B 6/38, G02B 6/42

(54) **LICHTLEITERKABEL MIT CLADDINGLICHTSENSOR UND ZUGEHÖRIGE JUSTAGE-, PRÜF- UND ÜBERWACHUNGSVORRICHTUNGEN**
OPTICAL CABLE WITH A CLADDING LIGHT SENSOR AND ASSOCIATED ADJUSTMENT, TEST AND MONITORING APPARATUSES
CÂBLE À FIBRES OPTIQUES DOTÉ D'UN CAPTEUR DE LUMIÈRE DE GAINAGE ET DISPOSITIFS DE RÉGLAGE, D'ESSAI ET DE SURVEILLANCE ASSOCIÉS

(30) Priorität: 25.06.2018 DE 102018210270
(43) Veröffentlichungstag der Anmeldung: 28.04.2021
(73) Patentinhaber: TRUMPF Laser SE, 78713 Schramberg (DE)
(72) Erfinder: FUCHS, Stefan, 78661 Boehringen (DE); KRENZ, Carsten, 70771 Leinfelden-Echterdingen (DE); MAIER, Dominik, 78662 Boesingen (DE); NAUE, Wolfgang, 78667 Villingendorf (DE)
(74) Vertreter: Trumpf Patentabteilung
(86) Internationale Anmeldenummer: PCT/EP2019/064874
(87) Internationale Veröffentlichungsnummer: WO 2020/001953

(56) Entgegenhaltungen:
- EP-A1- 2 479 594
- EP-A1- 2 805 790
- WO-A1-2013/095272
- WO-A1-2017/139630
- DE-A1- 4 414 862
- US-A- 5 463 710
- US-A1- 2011 305 249
- US-A1- 2012 126 950
- US-B1- 9 547 142
- US-B2- 7 427 165

## Beschreibung

Die Erfindung betrifft eine Justagevorrichtung, eine Überwachungsvorrichtung und ein Verfahren zum Überwachen eines Lichtleiterkabels.

Ein Lichtleiterkabel ist beispielsweise aus WO 2013/095272 A1 und EP 2 805 790 A1 bekannt geworden.

Bei der Übertragung von Laserlicht über einen Lichtleiter ist das oberste Ziel, die Strahlung möglichst gut und verlustarm zu übertragen. Entscheidend hierbei ist ein möglichst gutes Einkoppeln der Laserleistung in den Lichtleiter, um möglichst viele Strahlungsanteile über den Lichtleiter zu übertragen. Mitentscheidend ist die Kaustik, die der einzukoppelnde Strahl an der Einkoppelebene aufweist. Die Strahlverteilung ist oft eine Gaußverteilung, wodurch nicht alle Randstrahlen in den Faserkern eingekoppelt werden können. Diese Randanteile sind in der Einkoppelebene außerhalb des verwendeten Faserkerndurchmessers, weshalb diese Anteile in den Fasermantel (Cladding), der den Faserkern umgibt, eingekoppelt werden. Diese Strahlungsanteile werden zum größten Teil durch einen Modestripper im Ein- und Auskoppelstecker ausgekoppelt. Die restlichen Strahlungsanteile werden dann im Cladding mit größerem Divergenzwinkel durch den Lichtleiter geführt und treten mit größerem Divergenzwinkel am Ende des Lichtleiters genauso wieder aus. Ziel ist für eine gute und effiziente Faserkopplung, diese Anteile im Cladding möglichst gering zu halten.

Es ist bekannt, die Strahlungsanteile, welche in das Cladding eingekoppelt werden, unmittelbar nach der Einkoppelebene mittels Modestripper mantelseitig bzw. in radialer Richtung aus dem Cladding auszukoppeln und mit einer Fotodiode zu erfassen. Die Fotodiode kann jedoch nur bei speziellen Justier-Laserleiterkabeln in unmittelbarer Nähe des Modestrippers platziert werden, da in diesem Bereich die ausgekoppelte Leistung weggekühlt werden muss.

Die eingangs genannte WO 2013/095272 A1 offenbart einen Ausgangsstecker mit einem Sensor, um Laserlicht, das von der Bearbeitungsstelle in den Fasermantel rückreflektiert wurde und dann in radialer Richtung aus dem Fasermantel austritt, zu messen und damit den Bearbeitungsprozess zu steuern.

Die ebenfalls eingangs genannte EP 2 805 790 A1 offenbart einen Ausgangsstecker mit einem Sensor, um Laserlicht, das in radialer Richtung aus dem Fasermantel austritt, zu messen und damit die Laserleistung zu steuern.

Aus der WO 2017/139630 A1 ist noch ein separates Messgerät bekannt, das an eine Faser angeschlossen wird. Das Messgerät weist eine Blende und einen Detektor auf, der das an der Blende gestreute Licht misst. Dieses Messsignal wird als Justiersignal für die Einkopplung verwendet.

Aus der US 9 547 142 B1 ist ein optisches Sendermodul mit einem Lichtleiterkabel bekannt, wobei ein Sensor zum Messen einer Leistung eines durch das Lichtleiterkabel geführten optischen Signals vorgesehen ist.

Aus der US 5 463 710 A ist eine Vorrichtung zur Optimierung der Einkopplung von Laserstrahlung in eine optische Übertragungsfaser bekannt, wobei eine Einrichtung zur Detektion von aus der Übertragungsfaser austretendem Claddinglicht vorgesehen ist.

Die vorliegende Erfindung stellt sich die Aufgabe, bei einem Lichtleiterkabel der eingangs genannten Art anfallende Justage- und Überwachungsmaßnahmen zu optimieren und auch entsprechende Justage- und Überwachungsvorrichtungen anzugeben.

Diese Aufgabe wird erfindungsgemäß gelöst durch die Gegenstände der unabhängigen Ansprüche 1 und 2.

Die Offenbarung betrifft ein Lichtleiterkabel, dessen Auskoppelstecker mindestens einen hinter dem auskoppelseitigen Faserende angeordneten Claddinglichtsensor zum Messen von Claddinglicht aufweist, das am auskoppelseitigen Faserende stirnseitig aus dem Fasermantel austritt.

Der Auskoppelstecker weist einen integrierten Claddinglichtsensor zum Messen von stirnseitig austretendem Claddinglicht auf, so dass kein separates Messgerät erforderlich ist und die Messung jederzeit und insbesondere im laufenden Betrieb vorgenommen werden kann. Das so erhaltene Sensorsignal kann beispielsweise zur Referenzierung des Lichtleiterkabels selbst oder zur koaxialen Justage einer Einkoppeloptik zum Faserkern genutzt werden.

Vorzugsweise weist der Auskoppelstecker eine zwischen dem auskoppelseitigen Faserende und dem Claddinglichtsensor angeordnete Umlenkoptik, insbesondere Reflektorblende (Fernfeldblende), auf, die zumindest einen Teil des ausgetretenen Claddinglichts auf den mindestens einen Claddinglichtsensor lenkt. Die im Fasermantel geführten Randteile der eingekoppelten Laserstrahlung werden auf der Austrittsseite des Lichtleiterkabels über die Reflektorblende umgelenkt und mittels des Claddinglichtsensors (Fotodiode) erfasst.

Besonders bevorzugt weist das Lichtleiterkabel, insbesondere der Auskoppelstecker und/oder ein Einkoppelstecker am einkoppelseitigen Faserende, einen Datenspeicher zum Speichern von kabelspezifischen Daten auf. Hierbei kann es sich beispielsweise um Referenzdaten im Gut-/Neuzustand des Lichtleiterkabels handeln sowie um Daten, die nach einer definierten Strahldauer und bei vorgegebenen Leistungswerten gemessen worden sind. Die gespeicherten Daten ermöglichen die Entscheidung, ob das Lichtleiterkabel verwendet werden kann, sowie eine laufende und dynamische Überwachung/Kontrolle des Lichtleiterkabels im laufenden Betrieb.

Weiterhin kann der Auskoppelstecker mindestens einen Streulichtsensor zum Messen von Streulicht, das an einer auskoppelseitigen Faserendfläche oder an anderen Bauteilen im Auskoppelstecker gestreut wird, und/oder ein am einkoppelseitigen Faserende vorhandener Einkoppelstecker mindestens einen Streulichtsensor zum Messen von Streulicht, das an einer einkoppelseitigen Faserendfläche gestreut wird, aufweisen. Für die Streulichtmessung ist kein separates Messgerät erforderlich, und die Streulichtmessung kann jederzeit und insbesondere im laufenden Betrieb vorgenommen werden.

Erfindungsgemäß weist die eingangs genannte Justagevorrichtung ein Lichtleiterkabel mit einer optischen Faser auf, welche einen Faserkern und einen Fasermantel aufweist, mindestens einen hinter dem auskoppelseitigen Faserende angeordneten Claddinglichtsensor zum Messen von Claddinglicht, das am auskoppelseitigen Faserende stirnseitig aus dem Fasermantel austritt, und eine Einrichtung zum Verschieben eines einkoppelseitigen Faserendes der optischen Faser und/oder einer Einkoppeloptik, welche zum Einkoppeln von Licht in den Faserkern vor dem einkoppelseitigen Faserende angeordnet ist, relativ zueinander in Richtung rechtwinklig zur Faserachse in Abhängigkeit vom Sensorsignal des mindestens einen Claddinglichtsensors. Die Einkoppeloptik kann entweder am Laserlichtkabel selbst angebracht oder ein separat befestigtes Teil sein.

Erfindungsgemäß kann sehr sensibel über die Minimierung des Claddinglichts die Faserkopplung optimiert und die Einkoppeloptik auf minimale Divergenz und minimale Verluste einjustiert werden.

Der mindestens eine Claddinglichtsensor ist an einem Auskoppelstecker der optischen Faser oder an einem Laserbearbeitungskopf, in den der Auskoppelstecker eingesteckt ist, angeordnet. Im ersteren Fall ist der Claddinglichtsensor im Auskoppelstecker integriert, wodurch die Messung und die damit verbundene einfache Justage der Faserkopplung in dem Lichtleiterkabel implementiert sind und es keiner zusätzlichen Messvorrichtung oder -auswertung bedarf. Somit kann die Justage zu jeder Zeit überprüft und gegebenenfalls optimiert werden. Es ist auch ein geschlossener Regelkreis möglich, wodurch über eine aktive Regelung auf das Claddinglichtsignal die Fasereinkopplung nachjustiert und somit optimal gehalten werden kann.

Die Offenbarung betrifft weiterhin eine Prüfvorrichtung aufweisend ein Lichtleiterkabel mit einer optischen Faser, welche einen Faserkern und einen Fasermantel aufweist, mindestens einen hinter dem auskoppelseitigen Faserende angeordneten Claddinglichtsensor zum Messen von Claddinglicht, das am auskoppelseitigen Faserende stirnseitig aus dem Fasermantel austritt, und eine Auswerteeinrichtung, welche das Sensorsignal des Claddinglichtsensors auswertet. Besonders bevorzugt weist das Lichtleiterkabel einen Datenspeicher zum Speichern von kabelspezifischen Daten der Auswerteeinheit und mindestens einen Streulichtsensor zum Messen von Streulicht auf, das an einer Faserendfläche gestreut wird.

Der große Vorteil der erfindungsgemäßen Prüfvorrichtung besteht in einer detaillierten Überprüfung des Lichtleiterkabels beim erstmaligen Betrieb an einem Lasergerät. Die Entscheidung, ob das Lichtleiterkabel an diesem Lasergerät verwendet werden kann, kann selbstständig und automatisch übernommen und durchgeführt werden. Zudem ist eine laufende und dynamische Überwachung/Kontrolle im laufenden Betrieb hinsichtlich der Ausgangssituation möglich. Beim erstmaligen Verbinden/Einstecken des Lichtleiterkabels erkennt das Lasergerät das neue Lichtleiterkabel und verlangt eine Referenzierung. Hierbei wird das Lichtleiterkabel durch einen Selbsttest auf die notwendigen Parameter überprüft und bei Einhaltung der Grenzwerte für den Arbeitsbetrieb freigegeben. Kontrollen während des laufenden Betriebs sind ebenfalls möglich.

Wird ein Lichtleiterkabel an einem Lasergerät erstmalig in Betrieb genommen, müssen mehrere Tätigkeiten nacheinander erfolgen, um die Übertragung der Laserstrahlung über das Lichtleiterkabel möglichst effizient und verlustarm zu gewährleisten. Zuerst wird das Lichtleiterkabel dem entsprechenden Lichtweg der Strahlführung des Lasergeräts zugeordnet. Anschließend wird die Faserkopplung, d.h. die Justage der Einkoppeloptik zum Faserkern überprüft. Hierzu können das Claddinglicht im Auskoppelstecker und das Streulicht in der Einkopplung als Kriterium verwendet werden. Liegen das Cladding- und Streulicht innerhalb der Grenzwerte, welche speziell für diesen Gerätetyp im Lasergerät selbst hinterlegt wurden, kann die Referenzierung beginnen. Ziel der Referenzierung ist die Ermittlung von Cladding/Streulicht-Referenzwerten im Lichtleiterkabel, die für eine spätere Überwachung der Signale zugrunde gelegt werden können. Diese Referenzwerte müssen im Gut-/Neuzustand sowie ohne jegliche Materialbearbeitung ermittelt werden. Nach einer definierten Strahldauer und bei vorgegebenen Leistungswerten werden die Signale auf einem integrierten Datenspeicher des Lichtleiterkabels abgelegt. Dies erfolgt aber nur, wenn die erfassten Signale innerhalb der vorgegebenen Grenzwerte liegen, welche ebenfalls im Lasergerät hinterlegt sind.

Erfindungsgemäß weist die eingangs genannte Überwachungsvorrichtung ein Lichtleiterkabel mit einer optischen Faser auf, welche einen Faserkern und einen Fasermantel aufweist, mindestens einen hinter dem auskoppelseitigen Faserende angeordneten Claddinglichtsensor zum Messen von Claddinglicht, das am auskoppelseitigen Faserende stirnseitig aus dem Fasermantel austritt, mindestens ein optisches Element (z.B. Schutzglas) im Strahlengang des am auskoppelseitigen Faserende stirnseitig aus dem Faserkern ausgetretenen Lichts, mindestens einen Streulichtsensor zum Messen von Streulicht, das am mindestens einen optischen Element gestreut wird, und eine Auswerteeinrichtung, welche die Sensorsignale der Claddinglicht- und Streulichtsensoren auswertet. Vorteilhaft sind zwei optische Elemente, z.B. zwei Schutzgläser, im Strahlengang des am auskoppelseitigen Faserende stirnseitig aus dem Faserkern ausgetretenen Lichts hintereinander angeordnet, wobei jedem der Schutzgläser ein Streulichtsensor zugeordnet ist.

Werden Streulichtsensoren auch zur Überwachung von optischen Elementen im Lichtleiterkabel verwendet, wie z.B. Streulichtüberwachung an einem Schutzglas oder an der Faserendfläche, werden dadurch Verschmutzungen und Beschädigungen frühzeitig erkannt. Ebenfalls kann mit geeigneter Anordnung der optischen Elemente und des mindestens einen Streulichtsensors rückreflektiertes Laserlicht oder Prozessstrahlung detektiert werden. Durch Verwendung mehrerer Streulichtsensoren kann eine Verschmutzung eines optischen Bauteils von rückreflektiertem Laserlicht / Prozessstrahlung unterschieden werden, so dass eine Verschmutzung eines optischen Elements während der Bearbeitung trotz rückreflektiertem Laserlicht / Prozessstrahlung erkannt wird. Zudem besteht die Möglichkeit, beispielsweise in einer kurzen Pause zwischen zwei Bearbeitungen, eine Kontrolle ohne Bearbeitung schnell und einfach durchzuführen. Hierbei kann die für einen Wechsel der Bearbeitungsteile erforderliche Zeit genutzt werden, um das Lichtleiterkabel mit der Bearbeitungsoptik an einen definierten Ort zu fahren, wo in derselben Art und Weise wie bei der Referenzierung, die Cladding- und Streulichtwerte ohne Bearbeitung zu den ursprünglichen Werten (Referenzwerten) im Gut-/Neuzustand kontrolliert werden können. Bei Veränderung der Sensorsignale im Vergleich zum Anfang (Referenzwerte) können dem Bediener frühzeitig Handlungsempfehlungen über die Lasersteuerung mitgeteilt werden, so dass ein ungeplanter Stillstand im Vorfeld vermieden werden kann. Auch kann ein Tausch eines optischen Elements, wie z.B. eines Schutzglases, frühzeitig signalisiert und somit geplant werden.

Jedem Sensor ist ein Referenzwert zugeordnet, der bei Inbetriebnahme ohne Bearbeitung aufgenommen wurde. Weichen später die Messwerte zu stark von den jeweiligen Referenzwerten ab, wird dies von der Auswerteeinrichtung erkannt und das Lasergerät abgeschaltet. Weicht nur einer der Messwerte ab, kann dies zur Fehlerbestimmung genutzt werden. So kann bestimmt werden, ob die Abweichung von Prozessstrahlung, von einer Schutzglasverschmutzung oder aber von einer Dejustage der Fasereinkopplung herrührt.

Vorzugsweise weist ein Auskoppelstecker der optischen Faser den mindestens einen Claddinglichtsensor und ein Laserbearbeitungskopf, in den der Auskoppelstecker eingesteckt ist, das mindestens eine optische Element auf.

Die Erfindung betrifft schließlich auch ein Verfahren zum Überwachen eines Lichtleiterkabels, das eine optische Faser mit einem Faserkern und einem Fasermantel aufweist, im laufenden Betrieb mit folgenden Verfahrensschritten:
Messen von Claddinglicht, das am auskoppelseitigen Faserende stirnseitig aus dem Fasermantel austritt,
Messen von Streulicht, das an mindestens einem optischen Element gestreut wird, welches im Strahlengang des am auskoppelseitigen Faserende stirnseitig aus dem Faserkern ausgetretenen Lichts angeordnet ist, und
Auswerten des gemessenen Cladding- und Streulichts.

Weichen die Messwerte zu stark von den vorgegebenen Referenzwerten ab, wird dies von der Auswertung erkannt und das Laserlicht abgeschaltet.

Vorzugsweise wird auch Streulicht, das an einer Faserendfläche der optischen Faser oder an anderen Bauteilen gestreut wird, gemessen und zusammen mit dem gemessenen Cladding- und Streulicht ausgewertet.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: ein Laserlichtkabel mit einem Claddinglichtsensor;
- Fig. 2: eine erfindungsgemäße Justagevorrichtung mit dem Laserlichtkabel;
- Fig. 3: eine Prüfvorrichtung mit dem Laserlichtkabel und
- Fig. 4: eine erfindungsgemäße Überwachungsvorrichtung it dem Laserlichtkabel.

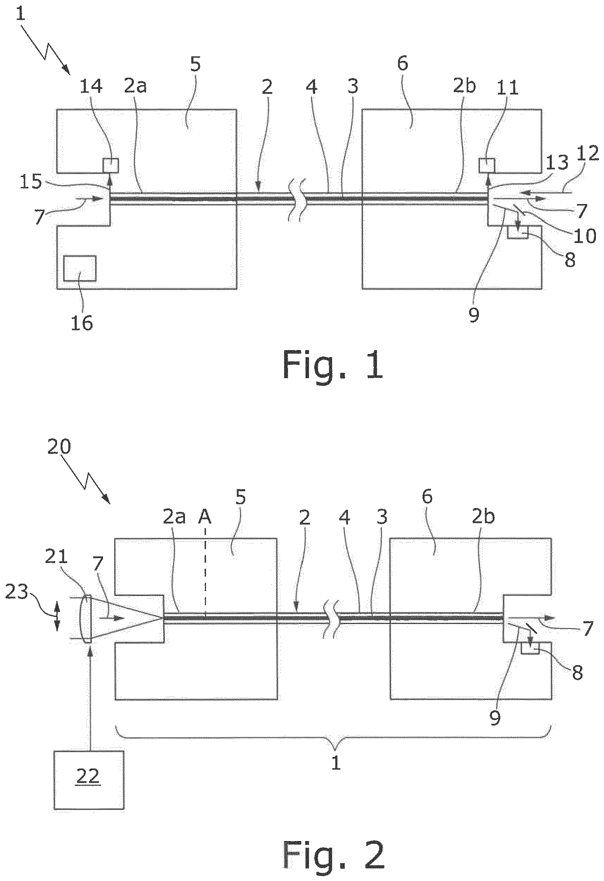

Das in **Fig. 1** gezeigte Laserlichtkabel **1** umfasst eine optische Faser **2** mit einem Faserkern **3** und mit einem den Faserkern 3 umgebenden Fasermantel **4,** sowie einen Einkoppelstecker **5** am einkoppelseitigen Faserende **2a** und einen Auskoppelstecker **6** am auskoppelseitigen Faserende **2b** der optischen Faser 2. Am einkoppelseitigen Faserende 2a wird Laserlicht **7** in den Faserkern 3 eingekoppelt und am auskoppelseitigen Faserende 2b aus dem Faserkern 3 wieder ausgekoppelt.

Der Auskoppelstecker 6 weist einen hinter dem auskoppelseitigen Faserende 2b angeordneten Claddinglichtsensor (z.B. Fotodiode) **8** auf, um Claddinglicht **9,** das am auskoppelseitigen Faserende 2b stirnseitig aus dem Fasermantel 4 austritt, zu messen. Zwischen dem auskoppelseitigen Faserende 2b und dem Claddinglichtsensor 8 befindet sich im Auskoppelstecker 6 eine z.B. als reflektive Fernfeldblende ausgebildete Umlenkoptik **10,** die einen Teil des ausgetretenen Claddinglichts 9 auf den Claddinglichtsensor 8 lenkt.

Der Auskoppelstecker 6 kann optional einen Streulichtsensor **11** zum Messen von rückreflektiertem Laserlicht und von am Bearbeitungsort generierter Prozessstrahlung **12** aufweisen, die in entgegengesetzter Richtung auf die auskoppelseitige Faserendfläche fallen und daran gestreut werden (Streulicht **13**) oder direkt auf den Streulichtsensor 11 fallen. Entsprechend kann auch der Einkoppelstecker 5 optional einen Streulichtsensor **14** zum Messen von Laserlicht 7 aufweisen, das an der einkoppelseitigen Faserendfläche gestreut wird (Streulicht **15**)**.** Weiterhin optional kann im Einkoppelstecker 5 oder im Auskoppelstecker 6 ein Datenspeicher **16** vorgesehen sein, um die von den Cladding- und Streulichtsensoren 8, 11, 14 gelieferten Messdaten als kabelspezifische Daten zu speichern. Die beiden Stecker 5, 6 können miteinander über hier nicht gezeigte Leitungen elektrisch verbunden sein, um so Sensordaten des einen Steckers in dem Datenspeicher 16 des anderen Steckers zu speichern.

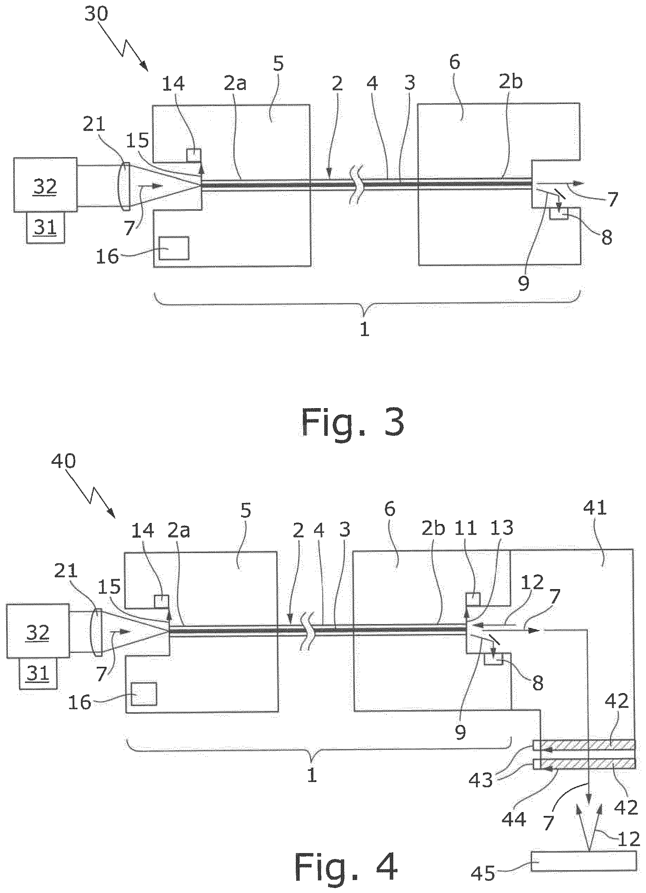

Die in **Fig. 2** gezeigte Justagevorrichtung **20** umfasst ein Laserlichtkabel 1 mit einem Einkoppelstecker 5, der eine vor dem einkoppelseitigen Faserende 2a angeordnete Einkoppeloptik (Einkoppellinse) **21** zum Einkoppeln von Laserlicht 7 in den Faserkern 3 aufweist, und mit einem Auskoppelstecker 6, der einen Claddinglichtsensor 8 aufweist, sowie eine Einrichtung **22** zum Verschieben der Einkoppellinse 21 relativ zum Einkoppelstecker 5 in Richtung des Doppelpfeils **23** rechtwinklig zur Faserachse **A.** Zur Justage der Einkoppellinse 21 wird Laserlicht 7 über die Einkoppellinse 21 in den Faserkern 3 eingekoppelt und mit dem Claddinglichtsensor 8 das dabei auftretende Claddinglicht 9 gemessen. Die Einkoppellinse 21 wird in Abhängigkeit vom Sensorsignal des Claddinglichtsensors 8 solange verschoben, bis das Claddinglicht 9 minimiert ist. Die Einkoppellinse 21 ist dann auf minimale Divergenz und minimale Verluste einjustiert. Es ist auch ein geschlossener Regelkreis möglich, wodurch über eine aktive Regelung auf das Sensorsignal des Claddinglichtsensors 8 die Fasereinkopplung nachjustiert und somit optimal gehalten werden kann. Statt wie gezeigt im Auskoppelstecker 6 kann der Claddinglichtsensor 8 alternativ auch in einem Laserbearbeitungskopf 41 (Fig. 4) angeordnet sein, in den der Auskoppelstecker 6 eingesteckt ist.

Die in **Fig. 3** gezeigte Prüfvorrichtung **30** umfasst ein Laserlichtkabel 1, das einen Einkoppelstecker 5 mit Einkoppellinse 21, Streulichtsensor 14 und Datenspeicher 16 und einen Auskoppelstecker 6 mit Claddinglichtsensor 8 aufweist, sowie eine externe Auswerteeinrichtung **31,** welche die Sensorsignale der Claddinglicht- und Streulichtsensoren 8, 14 auswertet und als kabelspezifische Daten im Datenspeicher 16 des Einkoppelsteckers 5 speichert.

Wird das Laserlichtkabel 1 an einem Lasergerät (Laserstrahlerzeuger) **32** erstmalig in Betrieb genommen, müssen mehrere Tätigkeiten nacheinander erfolgen, um die Übertragung des Laserlichts 7 über das Laserlichtkabel 1 möglichst effizient und verlustarm zu gewährleisten. Zuerst wird das Laserlichtkabel 1 dem entsprechenden Lichtweg der Strahlführung des Lasergeräts 32 zugeordnet, wodurch auch die Claddinglicht- und Streulichtsensoren 8, 14 und der Datenspeicher 16 mit der dem Lasergerät 32 zugeordneten Auswerteeinrichtung 31 verbunden werden. Anschließend wird die Faserkopplung, d.h. die korrekte Justage der Einkoppellinse 21 zum Faserkern 3, überprüft. Hierzu können das Claddinglicht 9 im Auskoppelstecker 6 und das Streulicht 15 in der Einkopplung als Kriterium verwendet werden. Liegen das Cladding- und Streulicht 9, 15 innerhalb der Grenzwerte, welche speziell für diesen Gerätetyp in der Auswerteeinrichtung 31 des Lasergeräts 32 hinterlegt wurden, kann die Referenzierung beginnen. Ziel der Referenzierung ist die Ermittlung von Cladding/Streulichtwerten, die für eine spätere Überwachung der Signale zugrunde gelegt werden können. Diese Referenzwerte müssen im Gut-/Neuzustand sowie ohne jegliche Materialbearbeitung ermittelt werden. Nach einer definierten Strahldauer und bei vorgegebenen Leistungswerten werden die Sensormesswerte von der Auswerteeinrichtung 31 auf dem integrierten Datenspeicher 16 abgelegt. Dies erfolgt aber nur, wenn die erfassten Signale innerhalb der vorgegebenen Grenzwerte liegen, welche ebenfalls in der Auswerteeinrichtung 31 hinterlegt sind.

Die in **Fig. 4** gezeigte Überwachungsvorrichtung **40** umfasst ein Laserlichtkabel 1, das einen Einkoppelstecker 5 mit Einkoppellinse 21 und Streulichtsensor 14 und einen Auskoppelstecker 6 mit Claddinglichtsensor 8 und Streulichtsensor 11 aufweist, sowie einen Laserbearbeitungskopf **41** mit zwei Schutzgläsern **42,** die sich im Strahlengang des aus dem Faserkern 3 ausgetretenen Laserlichts 7 befinden. Der Auskoppelstecker 6 ist in den Laserbearbeitungskopf 41 eingesteckt. Jedem der beiden Schutzgläser 42 ist ein Streulichtsensor **43** zugeordnet, um Streulicht **44** zu messen, das an dem jeweiligen Schutzglas 42 gestreut wird.

Jedem Sensor 8, 11, 14, 43 ist ein Referenzwert zugeordnet, der bei Erstinbetriebnahme des Laserlichtkabels 1 ohne Bearbeitung aufgenommen und im Datenspeicher 16 gespeichert ist. Weichen später die Sensormesswerte zu stark von den jeweiligen Referenzwerten ab, wird dies von der Auswerteeinrichtung 31 erkannt und das Lasergerät 32 abgeschaltet. Weicht nur einer der Sensormesswerte ab, kann dies zur Fehlerbestimmung genutzt werden. So kann von der Auswerteeinrichtung 31 bestimmt werden, ob die Abweichung von rückreflektiertem Laserlicht und Prozessstrahlung 12, welche von einem bearbeiteten Werkstück **45** stammt, von einer Schutzglasverschmutzung oder aber von einer Dejustage der Fasereinkopplung herrührt. Durch Verwendung mehrerer Streulichtsensoren 43 an einem Schutzglas 42 kann eine Verschmutzung des Schutzglases 42 von rückreflektiertem Laserlicht / Prozessstrahlung 12 unterschieden werden, so dass eine Schutzglasverschmutzung während der Bearbeitung erkannt wird.

Zudem besteht die Möglichkeit, beispielsweise in einer kurzen Pause zwischen zwei Bearbeitungen, eine Kontrolle ohne Bearbeitung schnell und einfach durchzuführen. Hierbei kann die für einen Wechsel der Bearbeitungsteile erforderliche Zeit genutzt werden, um den Laserbearbeitungskopf 41 an einen definierten Ort zu fahren, wo in derselben Art und Weise wie bei der Referenzierung die Cladding- und Streulichtwerte ohne Bearbeitung zu den ursprünglichen Werten (Referenzwerten) im Gut-/Neuzustand kontrolliert werden können. Bei Veränderung der Sensorsignale im Vergleich zum Anfang (Referenzwerte) können dem Bediener frühzeitig Handlungsempfehlungen über die Lasersteuerung mitgeteilt werden, so dass ein ungeplanter Stillstand im Vorfeld vermieden werden kann. Auch kann ein Tausch eines Schutzglases 42 frühzeitig signalisiert und somit geplant werden.

## Patentansprüche

1. Justagevorrichtung (20) aufweisend
ein Lichtleiterkabel (1) mit einer optischen Faser (2), welche einen Faserkern (3) und einen Fasermantel (4) aufweist, wobei das Lichtleiterkabel (1) einen Auskoppelstecker (6) an einem auskoppelseitigen Faserende (2b) der optischen Faser (2) aufweist, wobei der Auskoppelstecker (6) mindestens einen hinter dem auskoppelseitigen Faserende (2b) angeordneten Claddinglichtsensor (8) zum Messen von Claddinglicht (9) aufweist, das am auskoppelseitigen Faserende (2b) stirnseitig aus dem Fasermantel (4) austritt, und wobei der Auskoppelstecker (6) eine zwischen dem auskoppelseitigen Faserende (2b) und dem Claddinglichtsensor (8) angeordnete Umlenkoptik (10) aufweist, die zumindest einen Teil des ausgetretenen Claddinglichts (9) auf den mindestens einen Claddinglichtsensor (8) lenkt, und
eine Einrichtung (22) zum Verschieben eines einkoppelseitigen Faserendes (2a) der optischen Faser (2) und/oder einer Einkoppeloptik (21), welche zum Einkoppeln von Licht (7) in den Faserkern (3) vor dem einkoppelseitigen Faserende (2a) angeordnet ist, relativ zueinander in Richtung (23) rechtwinklig zur Faserachse (A) in Abhängigkeit vom Sensorsignal des mindestens einen Claddinglichtsensors (8).

2. Überwachungsvorrichtung (40) aufweisend
ein Lichtleiterkabel (1) mit einer optischen Faser (2), welche einen Faserkern (3) und einen Fasermantel (4) aufweist, wobei das Lichtleiterkabel (1) einen Auskoppelstecker (6) an einem auskoppelseitigen Faserende (2b) der optischen Faser (2) aufweist, wobei der Auskoppelstecker (6) mindestens einen hinter dem auskoppelseitigen Faserende (2b) angeordneten Claddinglichtsensor (8) zum Messen von Claddinglicht (9) aufweist, das am auskoppelseitigen Faserende (2b) stirnseitig aus dem Fasermantel (4) austritt, und wobei der Auskoppelstecker (6) eine zwischen dem auskoppelseitigen Faserende (2b) und dem Claddinglichtsensor (8) angeordnete Umlenkoptik (10) aufweist, die zumindest einen Teil des ausgetretenen Claddinglichts (9) auf den mindestens einen Claddinglichtsensor (8) lenkt, mindestens ein optisches Element (42) im Strahlengang des am auskoppelseitigen Faserende (2b) stirnseitig aus dem Faserkern (3) ausgetretenen Lichts (7),
mindestens einen Streulichtsensor (43) zum Messen von Streulicht (44), das am mindestens einen optischen Element (42) gestreut wird, und
eine Auswerteeinrichtung (31), welche die Sensorsignale der Claddinglicht- und Streulichtsensoren (8, 43) auswertet.

3. Überwachungsvorrichtung nach Anspruch 2, **dadurch gekennzeichnet, dass** mindestens zwei optische Elemente (42) im Strahlengang des am auskoppelseitigen Faserende (2b) stirnseitig aus dem Faserkern (3) ausgetretenen Lichts (7) hintereinander angeordnet sind und jedem der optischen Elemente (42) ein Streulichtsensor (43) zugeordnet ist.

4. Überwachungsvorrichtung nach Anspruch 2 oder 3, **dadurch gekennzeichnet, dass** der mindestens eine Claddinglichtsensor (8) an einem Auskoppelstecker (6) der optischen Faser (2) angeordnet ist.

5. Überwachungsvorrichtung nach einem der Ansprüche 2 bis 4, **dadurch gekennzeichnet, dass** das mindestens eine optische Element (42) an einem Laserbearbeitungskopf (41), in den der Auskoppelstecker (6) eingesteckt ist, angeordnet ist.

6. Überwachungsvorrichtung nach einem der Ansprüche 2 bis 5, **gekennzeichnet durch** mindestens einen Streulichtsensor (11, 14) zum Messen von Streulicht (13, 15), das an einer Faserendfläche der optischen Faser (2) oder an anderen Bauteilen gestreut wird.

7. Verfahren zum Überwachen eines Lichtleiterkabels (1), das eine optische Faser (2) mit einem Faserkern (3) und einem Fasermantel (4) aufweist, im laufenden Betrieb mit folgenden Verfahrensschritten:
Messen von Claddinglicht (9), das am auskoppelseitigen Faserende (2b) stirnseitig aus dem Fasermantel (4) austritt, mittels mindestens eines Claddinglichtsensors (8), wobei eine zwischen dem auskoppelseitigen Faserende (2b) und dem Claddinglichtsensor (8) angeordnete Umlenkoptik (10) zumindest einen Teil des ausgetretenen Claddinglichts (9) auf den mindestens einen Claddinglichtsensor (8) lenkt,
Messen von Streulicht (44), das an mindestens einem optischen Element (42) gestreut wird, welches im Strahlengang des am auskoppelseitigen Faserende (2b) stirnseitig aus dem Faserkern (3) ausgetretenen Lichts (7) angeordnet ist, und
Auswerten des gemessenen Cladding- und Streulichts (9, 43).

8. Verfahren nach Anspruch 7, **dadurch gekennzeichnet, dass** Streulicht (13, 15), das an einer Faserendfläche der optischen Faser (2) oder an anderen Bauteilen gestreut wird, gemessen und zusammen mit dem gemessenen Cladding- und Streulicht (9, 43) ausgewertet wird.

## Claims

1. An alignment device (20) comprising
an optical fiber cable (1) having an optical fiber (2) which has a fiber core (3) and a fiber cladding (4), the optical fiber cable (1) having a decoupling plug (6) at a decoupling-side fiber end (2b) of the optical fiber (2), the decoupling plug (6) having at least one cladding light sensor (8) arranged behind the decoupling-side fiber end (2b) for measuring cladding light (9), which emerges from the end face of the fiber cladding (4) at the decoupling-side fiber end (2b), and wherein the decoupling plug (6) has a deflection optic (10) which is arranged between the decoupling-side fiber end (2b) and the cladding light sensor (8) and which directs at least a portion of the emerged cladding light (9) onto the at least one cladding light sensor (8), and
a device (22) for displacing an input-coupling-side fiber end (2a) of the optical fiber (2) and/or an input-coupling optic (21), which is arranged in front of the input-coupling-side fiber end (2a) for coupling light (7) into the fiber core (3), relative to one another in the direction (23) at right angles to the fiber axis (A) as a function of the sensor signal of the at least one cladding light sensor (8).

2. A monitoring device (40) comprising
an optical fiber cable (1) having an optical fiber (2) which has a fiber core (3) and a fiber cladding (4), the optical fiber cable (1) having a decoupling plug (6) at a decoupling-side fiber end (2b) of the optical fiber (2), the decoupling plug (6) having at least one cladding light sensor (8), which is arranged behind the decoupling-side fiber end (2b), for measuring cladding light (9) which emerges from the end face of the fiber cladding (4) at the decoupling-side fiber end (2b), and wherein the decoupling plug (6) has a deflection optic (10) arranged between the decoupling-side fiber end (2b) and the cladding light sensor (8), which directs at least a portion of the cladding light (9) emitted onto the at least one cladding light sensor (8), at least one optical element (42) in the beam path of the light (7) emitted from the fiber core (3) at the end face of the decoupling-side fiber end (2b),
at least one scattered light sensor (43) for measuring scattered light (44) which is scattered at the at least one optical element (42), and an evaluation device (31) which evaluates the sensor signals of the cladding light and scattered light sensors (8, 43).

3. The monitoring device according to claim 2, **characterized in that** at least two optical elements (42) are arranged one behind the other in the beam path of the light (7) emerging from the end face of the fiber core (3) at the decoupling-side fiber end (2b), and a scattered light sensor (43) is assigned to each of the optical elements (42).

4. The monitoring device according to claim 2 or 3, **characterized in that** the at least one cladding light sensor (8) is arranged on a decoupling plug (6) of the optical fiber (2).

5. The monitoring device according to one of claims 2 to 4, **characterized in that** the at least one optical element (42) is arranged on a laser processing head (41) into which the decoupling plug (6) is plugged.

6. The monitoring device according to any one of claims 2 to 5, **characterized by** at least one scattered light sensor (11, 14) for measuring scattered light (13, 15) scattered on a fiber end face of the optical fiber (2) or on other components.

7. A method for monitoring an optical fiber cable (1), which has an optical fiber (2) with a fiber core (3) and a fiber cladding (4), during operation, comprising the following method steps:
measuring cladding light (9), which emerges from the end face of the fiber cladding (4) at the decoupling-side fiber end (2b), by means of at least one cladding light sensor (8), wherein a deflection optic (10) arranged between the decoupling-side fiber end (2b) and the cladding light sensor (8) directs at least a portion of the cladding light (9) which has emerged onto the at least one cladding light sensor (8),
measuring scattered light (44) which is scattered by at least one optical element (42) arranged in the beam path of the light (7) emerging from the end face of the fiber core (3) at the decoupling-side fiber end (2b), and
evaluating the measured cladding and scattered light (9, 43).

8. The method according to claim 7, **characterized in that** scattered light (13, 15), which is scattered at a fiber end face of the optical fiber (2) or at other components, is measured and evaluated together with the measured cladding and scattered light (9, 43).

## Revendications

1. Dispositif d'ajustement (20) comprenant
un câble à fibre optique (1) avec une fibre optique (2) qui présente une âme de fibre (3) et une gaine de fibre (4), le câble à fibre optique (1) présentant une fiche de découplage (6) à une extrémité de fibre (2b) côté découplage de la fibre optique (2), la fiche de découplage (6) présentant au moins un capteur de lumière de gaine (8) disposé derrière l'extrémité de fibre (2b) côté découplage pour mesurer la lumière de gaine (9), qui sort frontalement de la gaine de fibre (4) à l'extrémité de fibre (2b) du côté du découplage, et la fiche de découplage (6) ayant une optique de déviation (10) qui est disposée entre l'extrémité de fibre (2b) du côté du découplage et le capteur de lumière de gaine (8) et qui dirige au moins une partie de la lumière de gaine (9) sortante sur au moins un capteur de lumière de gaine (8), et
un dispositif (22) pour déplacer une extrémité de fibre (2a) côté couplage de la fibre optique (2) et/ou une optique de couplage (21), qui est disposée avant l'extrémité de fibre (2a) côté couplage pour le couplage de lumière (7) dans l'âme de fibre (3), l'une par rapport à l'autre dans la direction (23) perpendiculaire à l'axe de fibre (A) en fonction du signal de capteur dudit au moins un capteur de lumière de gaine (8).

2. Dispositif de surveillance (40) comprenant
un câble à fibre optique (1) avec une fibre optique (2) qui présente une âme de fibre (3) et une gaine de fibre (4), le câble à fibre optique (1) présentant une fiche de découplage (6) à une extrémité de fibre (2b) côté découplage de la fibre optique (2), la fiche de découplage (6) présentant au moins un capteur de lumière de gaine (8) disposé derrière l'extrémité de fibre (2b) côté découplage pour mesurer la lumière de gaine (9) qui sort de la gaine de fibre (4) côté frontal à l'extrémité de fibre (2b) côté découplage, et la fiche de découplage (6) présentant une optique de déviation (10) disposée entre l'extrémité de fibre (2b) côté découplage et le capteur de lumière de gaine (8), qui dirige au moins une partie de la lumière de gaine (9) sortante sur au moins un capteur de lumière de gaine (8), au moins un élément optique (42) dans le trajet du faisceau de lumière (7) sortant frontalement de l'âme de fibre (3) à l'extrémité de fibre (2b) située du côté du découplage, au moins un capteur de lumière diffusée (43) pour mesurer la lumière diffusée (44) qui est diffusée par au moins un élément optique (42), et un dispositif d'évaluation (31) qui évalue les signaux de capteur des capteurs de lumière de gaine et de lumière diffusée (8, 43).

3. Dispositif de surveillance selon la revendication 2, **caractérisé en ce qu'**au moins deux éléments optiques (42) sont disposés l'un derrière l'autre dans le trajet du faisceau de lumière (7) sortant frontalement de l'âme de fibre (3) à l'extrémité de fibre (2b) située du côté du découplage, et un capteur de lumière diffusée (43) est associé à chacun des éléments optiques (42).

4. Dispositif de surveillance selon la revendication 2 ou 3, **caractérisé en ce qu'**au moins un capteur de lumière de gaine (8) est disposé sur une fiche de découplage (6) de la fibre optique (2).

5. Dispositif de surveillance selon l'une des revendications 2 à 4, **caractérisé en ce que** ledit au moins un élément optique (42) est disposé sur une tête d'usinage laser (41) dans laquelle est enfichée la fiche de découplage (6).

6. Dispositif de surveillance selon l'une quelconque des revendications 2 à 5, **caractérisé par** au moins un capteur de lumière diffusée (11, 14) pour mesurer la lumière diffusée (13, 15) qui est diffusée sur une face d'extrémité de la fibre optique (2) ou sur d'autres composants.

7. Procédé de surveillance d'un câble à fibre optique (1), qui présente une fibre optique (2) avec une âme de fibre (3) et une gaine de fibre (4), en cours de fonctionnement, avec les étapes de procédé suivantes :
mesure de la lumière de gaine (9) qui sort frontalement de la gaine de fibre (4) à l'extrémité de fibre (2b) côté découplage, au moyen d'au moins
un capteur de lumière de gaine (8), une optique de déviation (10) disposée entre l'extrémité de fibre (2b) côté découplage et le capteur de lumière de gaine (8) dirigeant au moins une partie de la lumière de gaine (9) sortante sur au moins un capteur de lumière de gaine (8),
mesure de la lumière diffusée (44) qui est diffusée par au moins un élément optique (42) qui est disposé dans le trajet du faisceau de lumière (7) sortant frontalement de l'âme de fibre (3) à l'extrémité de fibre (2b) côté découplage, et
évaluation de la lumière de gaine et de la lumière diffusée (9, 43) mesurées.

8. Procédé selon la revendication 7, **caractérisé en ce que** la lumière diffusée (13, 15) qui est diffusée sur une surface d'extrémité de la fibre optique (2) ou sur d'autres composants est mesurée et évaluée en même temps que la lumière de gaine et la lumière diffusée (9, 43) mesurées.
